(19) Europäisches Patentamt / European Patent Office / Office européen des brevets

(11) **EP 2 928 243 B1**

(12) **EUROPEAN PATENT SPECIFICATION**

(45) Date of publication and mention
of the grant of the patent:
**24.10.2018 Bulletin 2018/43**

(51) Int Cl.:
*H04W 64/00* (2009.01)   *G01S 5/02* (2010.01)
*H04W 84/12* (2009.01)

(21) Application number: **14177730.0**

(22) Date of filing: **18.07.2014**

(54) **METHOD FOR THE INDOOR POSITIONING OF WIRELESS LOCAL AREA NETWORK (WLAN) DEVICES**

VERFAHREN ZUR INNENRAUMPOSITIONIERUNG VON DRAHTLOSEN LOKALEN NETZWERK (WLAN) -VORRICHTUNGEN

PROCÉDÉ DE POSITIONNEMENT INTÉRIEUR DE DISPOSITIFS À RÉSEAU LOCAL SANS FIL (WLAN)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2014 LT 2014056**

(43) Date of publication of application:
**07.10.2015 Bulletin 2015/41**

(73) Proprietor: **Kauno Technologijos Universitetas
44029 Kaunas (LT)**

(72) Inventors:
• **Povilaitis, Evaldas**
  **LT-70494 Vilkavi kio r. (LT)**
• **Salcius, Gintautas**
  **LT-50284 Kaunas (LT)**
• **Kazanavicius, Edgidijus**
  **LT-46343 Kaunas (LT)**
• **Liutkevicius, Agnius**
  **LT-47222 Kaunas (LT)**
• **Vrubliauskas, Arunas**
  **LT-47222 Kaunas (LT)**
• **Janaviciute, Audrone**
  **LT-47101 Kaunas (LT)**

(74) Representative: **Zaboliene, Reda
METIDA Law Firm Zaboliene and Partners
Business center VERTAS
Gyneju 16
01109 Vilnius (LT)**

(56) References cited:
EP-A1- 1 030 531        EP-A2- 2 650 693
US-A1- 2003 043 073     US-A1- 2008 153 507

Description

FIELD OF THE INVENTION

The invention belongs to the methods of determining indoor position of the objects using radio waves, and in particular, using wireless local area network (WLAN).

BACKGROUND OF THE INVENTION

While the number of various intellectualized home automation systems is constantly increasing worldwide, these systems require knowing exact positions of inhabitants, equipment and other things at home. Global positioning system (GPS), which is very popular for positioning outdoors, is almost completely not suitable to be used inside the buildings. Currently WLAN technology for indoor positioning is widely examined. This technology seems to be the most suitable for the indoor positioning of various WLAN devices like laptops, smart phones or WLAN bracelets (which in turn can be used to locate and identify persons). In this case, the preferred way of determining position is from the WLAN infrastructure side, not by the user WLAN devices as it is done usually, because information about objects' positions can be used not only by end users, but also used by other external systems like home automation systems mentioned above. Another advantage of the determining objects' positions from the WLAN infrastructure side (performed by WLAN access points) is that such approach guaranties more accurate results, than in case if position is determined by mobile WLAN device itself, because these mobile devices have very different hardware characteristics, which leads to different signal strength values calculated at the same location for different mobile devices.

The known analogs are using fingerprinting method. The fingerprinting method is one of the most popular and accurate indoor positioning methods, which is used in combination with WLAN technology. In order to use this technique, the radio signal strength map of the indoor environment must be constructed. Usually this map is obtained via experimental measurements or applying theoretical methods. In case of experimental measurements, the received signal strength indicator (RSSI) values for each WLAN access point are measured at different indoor locations. These measurements do not require any knowledge about building plan and physical structure, but take a lot of time to perform, especially in order to guarantee better accuracy. If any changes are made, which influence radio signal propagation (e.g. WLAN access point position changed), all measurements must be done again. Alternatively, theoretical methods, which are based on various radio signal propagation models, can be used in order to produce signal strength maps. These methods take into account radio signal attenuation according to distance, physical properties of the indoor environment, reflections, etc. In order to use theoretical methods for signal strength map construction, the additional information about environment is needed, including how walls and other object are influencing radio signal propagation and attenuation. The advantage of theoretical methods is that changes in the physical indoor environment require changing only the mathematical model of radio signal attenuation and propagation, avoiding complex, time and resource consuming measurements.

EP 2650693 (2013-10-16) discloses a known positioning method, device and a system, where the accuracy of object position determination is improved by evaluating influence of reflections and obstacles on the radio signal propagation between WLAN access point and object, which location is determined. In order to achieve this, the RSSI values measured at WLAN access points are compared with threshold values obtained from the signal propagation model. If the measured values differ by more than a threshold value, the RSSI values from that AP are excluded from the position calculation. The position of WLAN object is calculated using radio signal's time of arrival (TOA) or time difference of arrival (TDOA) methods. US 2003/043073 (2003-03-06) discloses a method for network based location of a mobile terminal in which an empirical RSSI map and a simulated RSSI map are compared to determine the location of the mobile terminal. Selected APs may be excluded from the method.

The before mentioned known positioning method, device and a system tries to avoid radio signals, affected by reflections, in order to improve positioning accuracy. However, this is hard to achieve, because there are many various obstacles indoors (walls, furniture, etc.). The coordinates of the objects are calculated using radio signal propagation time measurements, which require specialized and expensive equipment. The movement history is not collected and the obtained position is not further corrected. There is a known indoor positioning and tracking system RADAR, which is based on radio signals, where object position is determined from the infrastructure side, using radio signal propagation modeling as well as manual signal strength values input, in order to construct signal propagation maps (see paper: P. Bahl and V. N. Padmanabhan, "RADAR: an in-building RF-based user location and tracking system," in INFOCOM 2000. Nineteenth Annual Joint Conference of the IEEE Computer and Communications Societies. Proceedings. IEEE, 2000, vol. 2, pp. 775-784 vol.2.).

The before mentioned known indoor positioning and tracking system does not achieve high accuracy, because the construction of signal propagation map is based mainly on the manual measurements of the signal strengths, while the signal propagation models take into account only a few characteristics of the environment. The movement history is not collected, the obtained position is not further corrected, and the signal strength distribution is not taken into account, especially in such cases, when tracked object is near WLAN access point.

## SUMMARY OF THE INVENTION

The aim of the invention is to create the method for the WLAN objects indoor positioning, which determines objects positions from the WLAN infrastructure side, and which guarantee more accurate positioning and is more effective than existing methods, at the same time reducing the number of excess equipment needed to achieve this.

The aim is achieved by using position determination algorithm, according to which, the match between the radio signal propagation model and real signals propagation is evaluated, then it is determined if WLAN object is near any of WLAN access points involved in positioning, and if so, the object positioning is performed without RSSI value obtained from that access point, but the initial zone of possible object position around that access point is obtained from the signal propagation model, then the position correction method is used consisting at least from two stages, which collects the history of objects positions and then uses this movement history for the improvement of positioning accuracy.

In the position determination algorithm the match between the radio signal propagation model and real signals propagation is evaluated by obtaining RSSI values of each WLAN access point involved in the positioning at all other WLAN access points involved in positioning. The measured RSSI values are compared with those in the radio signal propagation model, where access points are located, and if the difference between real signal strength and the modeled signal strength is higher than defined threshold, the users of positioning system are informed, that model is not correct and needs to be improved according to the changed environment.

In the position determination algorithm it is determined if object is near any WLAN access point used for the positioning, taking into account the signal strength of that object and the radio signal propagation models.

The method for the position correction (improvement) consists of these stages: a) the evaluation of radio signal strength random scattering is performed so, that if newly calculated position differs too much from previous one, then new position is corrected in such way, that direction is preserved, but the distance from last position does not exceed the defined value; b) the calculated position is corrected taking into account the defined size history of previous positions, while correction is performed using deterministic and/or probabilistic methods.

During the configuration stage of positioning system the signal propagation models are constructed for each WLAN access point. The indoor map is used to create radio signal propagation models, taking into account how each wall influences signal attenuation. The exact position of WLAN access point is marked in its room map. The radio signal propagation model for each access point is constructed based on all previously collected information about indoor environment.

The information collected from the WLAN access points is used during the position determination process. Information about each WLAN object, detected by access points, is transferred from these access points to the central server via local area network. Each WLAN object should be seen by at least two WLAN access points. The RSSI value of WLAN object is compared with the radio signal propagation model (map) at each WLAN access point, which sees that WLAN object.

## BRIEF DESCRIPTION OF THE DRAWINGS

The invention is explained in detail using drawings, which depict:

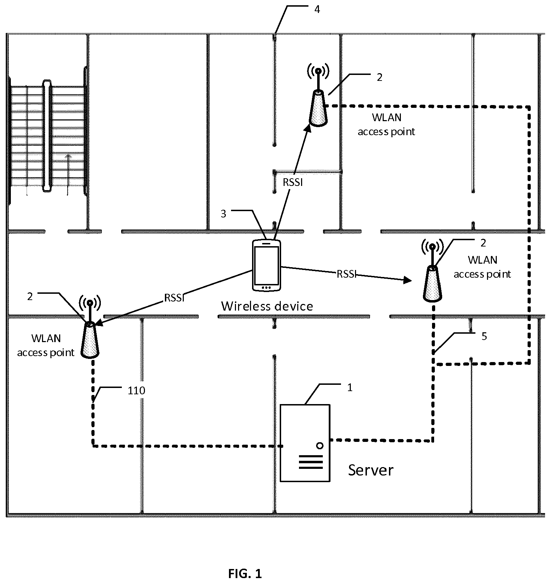

FIG. 1 - The structural scheme of position determination method, consisting of indoor location plan, the equipment used for the determination of position, and the wireless user's device, which position is being determined.
FIG. 2 - The sequence of main activities of the invented method.
FIG. 3 - The scheme of WLAN object operation.

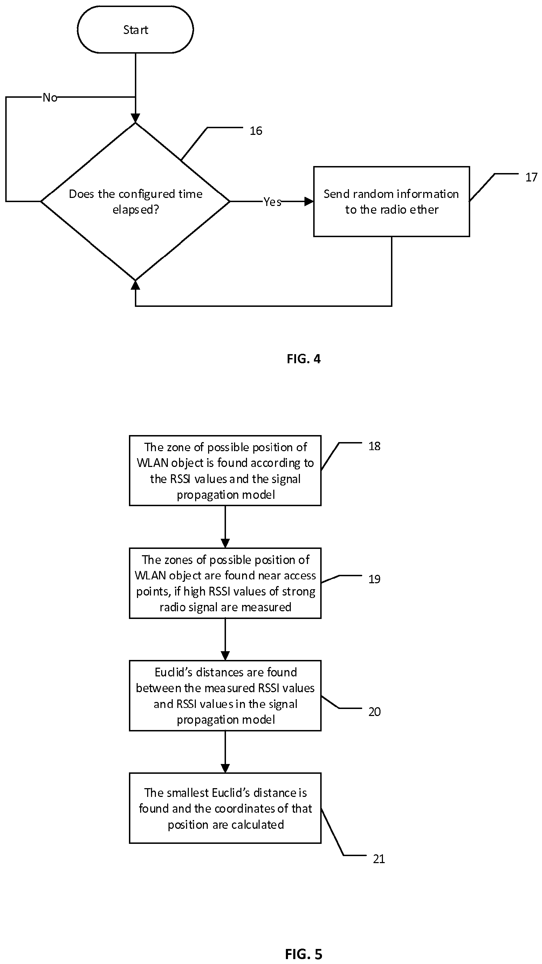

FIG. 4 - The scheme of WLAN access point operation.
FIG. 5 - The sequence of activities of the position determination algorithm.

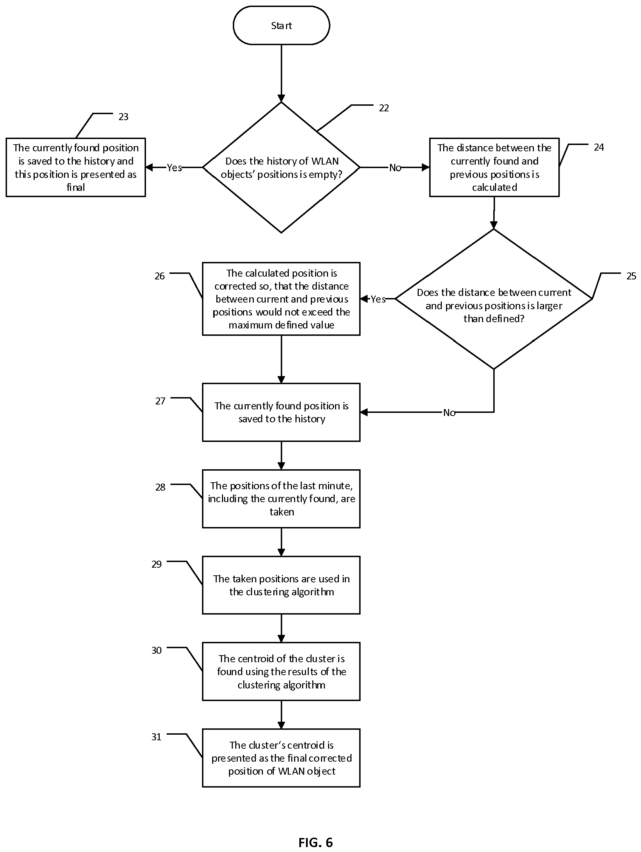

FIG. 6 - The sequence of activities of the position correction method.
FIG. 7 - The example of usage of WLAN object positioning method.

## DETAILED DESCRIPTION

The proposed method for indoor positioning of WLAN objects was implemented using the system, which consists of: a) indoor positioning server (1), which collects information from the WLAN access points and calculates positions of detected WLAN objects. The server calls WLAN access points at predefined time intervals and receives signal strength values of detected WLAN objects, then uses this information to calculate positions of WLAN objects, i.e. the positioning is performed from the WLAN infrastructure side; b) WLAN access points (2), which are able to operate in the monitor mode. This means, that every WLAN access point, which belongs to the indoor positioning system, is able to listen for all WLAN packets spread in ether, accumulate information about these packets, and to transmit this information to the central positioning server on demand. WLAN access points are accumulating information including MAC address of detected WLAN object, its RSSI value, as well as time stamp, when WLAN object was detected last time. The information not older than defined is used for positioning. The signal propagation model must be constructed for each WLAN access point, i.e. the information about WLAN access point's signal strength values (RSSI) at different indoor positions is needed. In order to create this signal propagation model effectively and quickly, mathematical methods are used, such as multi-wall or the new empirical model (K.-W. Cheung, J. H.-M. Sau, R. D. Murch, "A new empirical model for indoor propagation prediction," Veh. Technol. Ieee Trans., vol. 47, no. 3, pp. 996-1001, 1998.), which take into account not only signal attenuation according to the traveled distance, but influence of walls as well; c) WLAN objects (3), which positions are being determined. These are devices or any things, with WLAN modules affixed. The main requirements for these objects, that their WLAN modules constantly and periodically transmit WLAN packets into the radio ether. It is necessary in order to detect WLAN objects from the WLAN access points of the positioning system. Specific WLAN module, specifically device or object, is identified by its MAC address.

The method of indoor positioning is suitable for rooms (4), consisting of walls, corridors, stairs, etc. Wireless access points (2) and positioning server (1) are interconnected via local computer network (5), using Ethernet (IEEE 802.3) protocol.

The invented positioning method consists of five main stages:

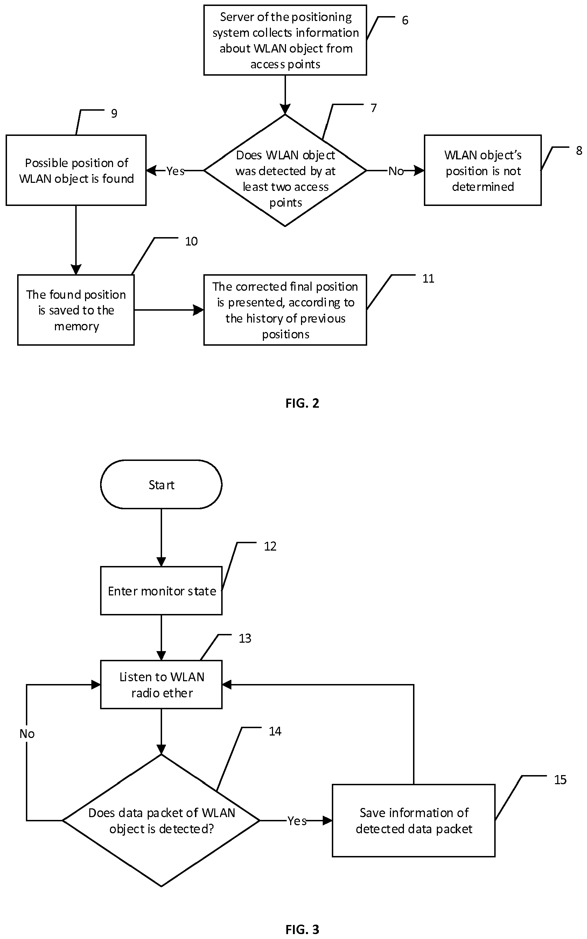

Stage 1. The positioning server gathers all information needed for the positioning (6) from each WLAN access point included in the positioning system. The received information about WLAN object, being positioned, consists of: a) object's received signal strength indicator - RSSI; b) object's MAC address; c) timestamp, when object was detected last time. This information is collected by access points according to FIG. 2, by performing the following actions: a) when positioning system is started, access point switches to the monitor mode (12), and WLAN monitor mode allows analyzing all radio packets received by access point from both connected to that access point WLAN devices and other WLAN devices roaming around; b) when operating in monitor mode, WLAN access point listens to WLAN radio ether (13) and as soon as a radio packet from WLAN object is detected (14), information about object's RSSI, timestamp, and MAC address is saved immediately (15). In order to detect WLAN objects at WLAN access points, these objects must perform the following actions according to FIG. 3: a) when WLAN object is started, after some configured period of time (16), data packet (17) is sent to the WLAN radio ether, containing WLAN object's MAC address together with any random data, which increases packet's size and ensures better detection of that radio packet; b) sending of radio data packets is performed periodically as long as WLAN object positioning needs to be done, at the same time no additional computations or data processing is performed at WLAN object, hence only minimal energy resources are used for WLAN object operation.

Stage 2. The collected information is analyzed to determine, if WLAN object is detected by at least two WLAN access points (7). Positions of WLAN objects, which are detected by at least two access points, are further determined only. If WLAN object is seen only by one access point, its positioning is not performed (8).

Stage 3. The position determination algorithm is used to determine WLAN object position (9).

Stage 4. The determined position of WLAN object is saved to the memory (10), and this position is used later by the position correction method.

Stage 5. The final WLAN object position is corrected taking into account previously determined positions (11), using position determination correction method.

The positioning of all WLAN objects, which are seen by at least two access points, is performed in the same manner. The positioning period is configurable, but usually position determination process is performed every 1 second constantly. The final position is presented as coordinates with centimeters precision.

**Position determination algorithm**

The position determination algorithm employs radio signal propagation models of WLAN access points and information about detected WLAN objects and their RSSI values, received from these access points. The positions of all detected objects, which have WLAN modules, are determined using this information. This process consists of four stages:

Stage 1. In order to reduce the computational load, not all signal propagation maps of each WLAN access point, which detected specific WLAN object, are analyzed, but possible location space of detected WLAN object is determined by eliminating all places, where this object cannot be for sure (18). The exclusion is performed by eliminating all coverage areas of those access points, which do not detect object being located. When object position space is determined, the exact position of WLAN object is calculated during the next stages, based on the signal propagation models of access points in that space as well as RSSI values of WLAN object, received by those access points.

Stage 2. If WLAN object is too close to any access point, then possible presence zone of WLAN object is found around that access point (19), while RSSI value received by that access point is not used further to calculate Euclid's distance (20). The circle like possible presence zone around access point is calculated according to the RSSI value. The position is further corrected by other access points. The RSSI value, received by an access point, is used to determine if object is too close to the access point. If this signal strength exceeds the defined threshold, it is treated that WLAN object is too close to the access point. The evaluation of the distance between WLAN object and access point is needed, because of a significant WLAN radio signal scattering for short distances.

Stage 3. The final position of WLAN object is found by calculating Euclid's distance between RSSI values of WLAN object, obtained by WLAN access points, and the corresponding signal strength values of signal strength maps (20). The following formula is used:

$$d = \sqrt{\sum_{i=1}^{n} (q_i - p_i)^2}$$

$q_i$ - the RSSI value of WLAN object calculated by the i-th access point, $p_i$ - the RSSI value in the signal propagation model of the i-th access point, n - the number of access points used for positioning. The number of calculated Euclid's distances is equal to the number of signal strength values, which fall in the possible location zone of WLAN device in the signal propagation model.

Stage 4. The smallest Euclid's distance is found and the column and row indexes of the signal propagation model matrix are saved, which correspond to the shortest distance (21). The row and column indexes are further used to calculate position. The x and y coordinates are found using formula:

$$x = \frac{\text{Room length (m)}}{\text{Number of columns in RSSI file}} \times \text{Column index}$$

$$y = \frac{\text{Room width (m)}}{\text{Number of rows in RSSI file}} \times \text{Row index}$$

**Position correction method**

The position correction method, using the history of positions found previously, corrects the currently calculated position. The correction of position can be performed using various mathematical methods. These methods are divided into deterministic (Weighted K-nearest neighbor (WKNN), K-nearest neighbor (KNN), etc.) and probabilistic (Histogram, Kernel, Gaussian, Log-normal, Inverse function, etc.). The position correction method, using KNN algorithm, is given below. Method consists of five stages:

Stage 1. The positioning system accumulates positions of all detected WLAN objects constantly. It is checked, if there are any previously found positions of WLAN object, before starting the correction of the position (22). If WLAN object, which position is corrected, does not have history of previous positions, then currently found position is saved to the positions history and algorithm finishes (23). In this case, current position is considered as final corrected position. If WLAN object's positions history is not empty, then current position is corrected taking into account maximum defined distance between subsequent positions (24).

Stage 2. It is checked, if currently found position is not too far away from previous one, as it is defined in algorithm (25). If the distance between the current and previously found positions is larger than defined, the current position is corrected (26). The position's coordinates are changed so, that the maximum defined distance between subsequent positions would not be exceeded. The movement direction is preserved, while correcting the position, only the distance between previous and current positions is decreased.

Stage 3. The currently calculated position is saved to the history (27). It can be not corrected if (25) condition is not satisfied, or corrected if (25) condition is satisfied. Stage 4. The last minute (or shorter period of time, if system just started, or another period of time as defined) positions are taken for further calculations (28). The currently calculated position is taken as well.

Stage 5. The densest cluster of previously determined positions is found, using clustering algorithm with defined number of clusters (29). The centroid of the densest cluster is calculated and its coordinates saved (30). The coordinates of the centroid are treated as corrected position of WLAN object (31).

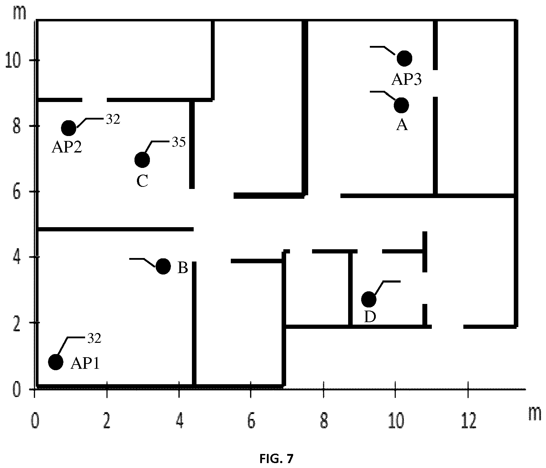

FIG. 7 presents the example of usage of the proposed positioning method, where 3 WLAN access points are used (32), defined as AP1, AP2, AP3, and 4 different WLAN objects are positioned. These WLAN objects are in 4 places - A(33), B(34), C(35) and D(36). Table 1 presents the positioning accuracy errors, which are the result of 10 minutes positioning and comparing the measured positions with real ones (the positioning period was 1 second, which resulted in 600 coordinates' pairs for each of 4 places).

Table 1. The positioning accuracy errors

|  | Highest error, m | Smallest error, m | Average, m | Standard deviation, m |
| --- | --- | --- | --- | --- |
| Position A (33) | 2.98 | 0.94 | 1.41 | 0.64 |
| Position B (34) | 2.16 | 0.27 | 0.62 | 0.50 |
| Position C (35) | 1.40 | 0.17 | 0.52 | 0.43 |
| Position D (36) | 2.57 | 0.11 | 1.33 | 1.08 |

## Claims

1. Wireless local area network, WLAN, objects indoor positioning method, comprising positioning technique, which uses WLAN radio signals strength parameter, performs positioning from the network infrastructure side, comprising position determination algorithm, which uses signal propagation maps for the positioning of WLAN object and calculates Euclid's distance, **characterized in that,** the position determination algorithm is used, which performs signal propagation model and real signals conformity evaluation, then determines if object is near any of WLAN access points, and if object is near WLAN access point, calculates object's position without RSSI value obtained from that access point, but according to the signal propagation model finds possible presence zone of the object around that access point, the position correction method is used, consisting of at least two stages, accumulating the selected size positions history of each object, and uses this movement history further for possible revision of object's position.

2. WLAN objects indoor positioning method according to claim 1, **characterized in that,** in the position determination algorithm performs signal propagation model and real signals conformity evaluation, by measuring RSSI values of each WLAN access point, which is used in the positioning system, from all other access points used in the positioning system, compares the measured RSSI values with corresponding RSSI values in the signal propagation model **in that** place, where access point really is, during comparison when the difference between RSSI values exceeds the defined limit, informs the user of the positioning system about mismatch between signal propagation model and reality, and necessity of the improvement of the data, which is used to construct the signal propagation model.

3. WLAN objects indoor positioning method according to claim 1, **characterized in that,** in the position determination algorithm detects if object is near any of WLAN access points, used for the positioning, considering the signal strength of the object and the constructed signal propagation models.

4. WLAN objects indoor positioning method according to claim 1, **characterized in that,** the positioning correction method includes the following stages: a) the evaluation of the random scattering of the radio signal, if a newly found and the previous positions differ more than defined, then recalculates new position by preserving the movement direction, but without exceeding the defined distance; b) corrects the current position using the history of previous positions, accumulates the history of the last positions of each object of the defined size, while performs corrections using deterministic and/or probabilistic methods.

5. WLAN objects indoor positioning method according to claim 1, **characterized in that,** it transfers the information about WLAN objects, detected by WLAN access points, from each access point of the positioning system to the server via local network.

6. WLAN objects indoor positioning method according to any one of claims 1-4, **characterized in that,** it uses the signal propagation maps of the access points for the object positioning, and employs empirical signal propagation models to create these maps.

7. WLAN objects indoor positioning method according to any one of claims 1-4, **characterized in that,** it determines the position of the object, if that object was detected by at least two access points.

**Patentansprüche**

1. Drahtloses lokales Netzwerk, WLAN-Indoor-Objekt-Positionierungsverfahren, umfassend eine Positionierungstechnik, die WLAN-Funksignaltärke-Parameter verwendet, führt Positionierung von der Netzwerkinfrastruktur Seite aus, bestehend aus einem Positionsbestimmungsalgorithmus, der die Signalausbreitungskarten für die Positionierung von WLAN-Objekt verwendet und Euklidische Entfernung berechnet, **dadurch gekennzeichnet, dass** ein Positionsbestimmungsalgorithmus verwendet wird, der eine Signalausbreitungsmodell- und Realsignalkonformitätsbewertung durchführt und dann bestimmt, ob das Objekt sich in der Nähe eines beliebigen WLAN-Zugangspunkts befindet und wenn das Objekt sich in der Nähe eines WLAN-Zugangspunkts befindet, berechnet er die Position des Objekts ohne des von diesem Zugriffspunkt erhalten RSSI-Wertes, aber gemäß dem Signalausbreitungsmodell eine mögliche Anwesenheitszone des Objekts um diesen Zugangspunkt herum findet, es wird ein Positionskorrekturverfahren verwendet, das aus mindestens zwei Stufen besteht und den ausgewählten Größenpositionsverlauf jedes Objekts akkumuliert , und verwendet diesen Bewegungsverlauf weiter für mögliche Korrektur der Objektposition.

2. WLAN-Indoor-Objekt-Positionierungsverfahren nach Anspruch 1, **dadurch gekennzeichnet, dass** der Positionsbestimmungsalgorithmus eine Signalausbreitungsmodell- und RealsignalKonformitätsbewertung durchführt durch Messen von RSSI-Werten jedes WLAN-Zugangspunkts, der in dem Positionierungssystem verwendet wird, von allen anderen Zugangspunkten, die in dem Positionierungssystem verwendet werden, vergleicht die gemessenen RSSI-Werte mit entsprechenden RSSI-Werten in dem Signalausbreitungsmodell an der Stelle, an der der Zugangspunkt tatsächlich ist, wenn, während des Vergleichs, die Differenz zwischen RSSI-Werten den definierten Grenzwert überschreitet, informiert das Positionierungssystem den Benutzer über die Fehlanpassung zwischen Signalausbreitungsmodell und Realität und die Notwendigkeit der Verbesserung der Daten, die zum Aufbau des Signalausbreitungsmodells verwendet werden.

3. WLAN-Indoor-Objekt-Positionierungsverfahren nach Anspruch 1, **dadurch gekennzeichnet, dass** in dem Positionsbestimmungsalgorithmus erfasst wird, ob sich ein Objekt in der Nähe von irgendeinem der für die Positionierung verwendeten WLAN-Zugangspunkten befindet, unter Berücksichtigung der Signalstärke des Objekts und der aufgestellten Signalausbreitungsmodelle.

4. WLAN-Indoor-Objekt-Positionierungsverfahren nach Anspruch 1, **dadurch gekennzeichnet, dass** das Positionierungskorrekturverfahren folgende Schritte umfasst: a) die Auswertung der zufälligen Streuung des Funksignals, wenn sich eine neu gefundene und die vorhergehende Position dann mehr als definiert unterscheidet, wird die Neuberechnung der neuen Position durch Bewahrung der Bewegungsrichtung, ohne jedoch die definierte Entfernung zu überschreiten durchgeführt; b) Korrigiert die aktuelle Position unter Verwendung des Verlaufs früherer Positionen, akkumuliert den Verlauf der letzten Positionen jedes Objekts der definierten Größe, während Korrekturen mit deterministischen und / oder probabilistischen Methoden durchgeführt werden.

5. WLAN-Indoor-Objekt-Positionierungsverfahren nach Anspruch 1, **dadurch gekennzeichnet, dass** es die von WLAN-Zugangspunkten erfasste Information über WLAN-Objekte von jedem Zugangspunkt des Ortungssystems zum Server über ein lokales Netzwerk überträgt.

6. WLAN-Indoor-Objekt-Positionierungsverfahren nach einem der Ansprüche 1-4, **dadurch gekennzeichnet, dass** es die Signalausbreitungskarten der Zugangspunkte für die Objektpositionierung verwendet und empirische Signalausbreitungsmodelle verwendet, um diese Karten zu erzeugen.

7. WLAN-Indoor-Objekt-Positionierungsverfahren nach einem der Ansprüche 1-4, **dadurch gekennzeichnet, dass** es die Position des Objekts bestimmt, wenn dieses Objekt von mindestens zwei Zugangspunkten erfasst wurde.

**Revendications**

1. Réseau local sans fil, WLAN, une méthode de positionnement d'objets intérieurs comprenant une technique de positionnement qui utilise le paramètre de la puissance du signal radio WLAN, effectue le positionnement à partir du côté de l'infrastructure du réseau, comprenant un algorithme de détermination de position, qui utilise des cartes de diffusion du signal pour déterminer la position d'objets WLAN et calcule des distances selon Euclide, **caractérisée en ce que** l'algorithme de détermination de position qui est utilisé compose un modèle de diffusion de signal et procède à une évaluation de la conformité de signaux réels, ensuite elle détermine si l'objet est à proximité d'un des points d'accès de WLAN et si oui, elle calcule la position de l'objet sans obtenir la valeur RSSI à partir de ce point d'accès, mais, en fonction du modèle de diffusion du signal, elle trouve la zone de présence possible de l'objet autour du point d'accès en question, la méthode de correction de la position est utilisée, consistant d'au moins deux étapes, en accumulant l'historique des positions de taille de chaque objet et utilise cet historique de mouvement, au-delà, à des fins d'un examen de la position de l'objet.

2. Méthode de positionnement intérieur d'objets WLAN, conformément à la revendication 1, **caractérisée en ce que** dans l'algorithme de détermination de position elle produit un modèle de diffusion du modèle et l'évaluation de la conformité du signal réel, en mesurant les valeurs RSSI de chaque point d'accès au réseau WLAN, qui est utilisé dans le système de positionnement à partir de tous les autres points d'accès utilisés dans le système de positionnement, compare les valeurs RSSI prélevées aux valeurs RSSI correspondantes dans le modèle de diffusion de signal à cet endroit, là où est situé véritablement le point d'accès, au cours de la comparaison lorsque la différence entre les valeurs RSSI dépasse la limite prédéfinie, avertit l'utilisateur du système de positionnement au sujet de défaut de correspondance entre le modèle de diffusion du signal et la réalité et la nécessité d'amélioration des données utilisées pour construire le modèle de diffusion du signal.

3. La méthode de positionnement d'objets intérieurs de réseau WLAN, conformément à la revendication 1, **caractérisée en ce que** l'algorithme de détermination de position détecte si l'objet est situé à proximité d'un quelconque point d'accès du réseau WLAN, utilisé pour le positionnement, en examinant la puissance du signal de l'objet et les modèles de diffusion du signal déjà construits.

4. Conformément à la revendication 1, la méthode de positionnement intérieur d'objets du réseau WLAN, **caractérisée en ce que,** la méthode de rectification du positionnement comprend les étapes suivantes : a) l'évaluation de la diffusion aléatoire du signal radio, si la position nouvellement détectée et les positions précédentes diffèrent plus que ce que leur définition, elle calcule, de nouveau, la nouvelle position en conservant la direction du mouvement mais sans dépasser la distance définie;
b) corrige la position actuelle en utilisant l'historique des positions précédentes, accumule l'historique des dernières positions de chaque objet de la taille définie, tout en effectuant des corrections à l'aide de méthodes déterministes et / ou probabilistes.

5. Conformément à la revendication 1, la méthode de positionnement intérieur d'objets du réseau WLAN, **caractérisée en ce qu'**elle transmet l'information au sujet d'objets du réseau WLAN détectés par les points d'accès du réseau WLAN, à partir de chaque point d'accès du système de positionnement vers le serveur par l'intermédiaire du réseau local.

6. Conformément à n'importe laquelle des revendications 1-4, la méthode de positionnement intérieur d'objets du réseau WLAN, **caractérisée en ce qu'**elle utilise les, cartes de diffusion du signal des points d'accès pour le positionnement de l'objet et a recours à des modèles empiriques de diffusion de signaux pour établir lesdites cartes.

7. Conformément à n'importe laquelle des revendications 1-4, la méthode de positionnement intérieur d'objets du réseau WLAN, **caractérisée en ce qu'**elle détermine la position de l'objet si celui-ci a été détecté par au moins deux points d'accès.

FIG. 1

```
                    ┌─────────────────────┐
                    │ Server of the positioning │      6
                    │ system collects information │ ╱
                    │ about WLAN object from │
                    │     access points     │
                    └──────────┬──────────┘
                               │
                               ▼
┌──────────────────┐        ╱◇╲              7
│                  │      ╱      ╲         ╱
│ Possible position of │ ◀─Yes─ Does WLAN object ─No─▶  ┌──────────────┐
│ WLAN object is found │      was detected by at          │ WLAN object's │    8
│                  │        least two access            │ position is not │ ╱
└────────┬─────────┘          points                    │  determined   │
         │              ╲      ╱                        └──────────────┘
         │                ╲◇╱
         ▼
┌──────────────────┐       10         ┌──────────────────┐
│  The found position │ ╱              │ The corrected final position │   11
│   is saved to the   │ ──────────▶   │ is presented, according to │ ╱
│      memory         │               │ the history of previous │
└──────────────────┘                  │      positions      │
                                      └──────────────────┘
```

**FIG. 2**

```
                    ╭─────────╮
                    │  Start   │
                    ╰────┬────╯
                         │
                         ▼
              ┌──────────────────┐        12
              │ Enter monitor state │ ╱
              └─────────┬────────┘
                         │
                         ▼
         ┌──▶┌──────────────────┐        13
         │   │  Listen to WLAN   │ ╱          ◀──┐
         │   │    radio ether    │              │
         │   └─────────┬────────┘              │
         │             │                        │
   No    │             ▼         14             │
         │           ╱◇╲        ╱                │
         │         ╱      ╲    ╱                  │
         └──── Does data packet of WLAN ──Yes─▶ ┌──────────────────┐   15
               object is detected?              │ Save information of │ ╱
                 ╲      ╱                        │ detected data packet │
                   ╲◇╱                           └──────────────────┘
```

**FIG. 3**

Start

No

Does the configured time elapsed? — 16

Yes — Send random information to the radio ether — 17

FIG. 4

The zone of possible position of WLAN object is found according to the RSSI values and the signal propagation model — 18

The zones of possible position of WLAN object are found near access points, if high RSSI values of strong radio signal are measured — 19

Euclid's distances are found between the measured RSSI values and RSSI values in the signal propagation model — 20

The smallest Euclid's distance is found and the coordinates of that position are calculated — 21

FIG. 5

```
                            ┌──────────┐
                            │  Start   │
                            └────┬─────┘
                                 │
                                 ▼
23                            ╱╲  22
┌────────────────────┐      ╱    ╲              ┌────────────────────┐
│ The currently found │    ╱ Does the ╲         │ The distance between│  24
│ position is saved to│◄──Yes─ history of WLAN ──No──►│ the currently found │
│ the history and this│    ╲ objects' positions╱     │ and previous        │
│ position is presented│    ╲ is empty?  ╱          │ positions is        │
│ as final            │      ╲    ╱              │ calculated          │
└────────────────────┘        ╲╱                └──────────┬─────────┘
                                                           │
                                                           ▼
                                                         ╱╲  25
┌──────────────────────┐                               ╱    ╲
│ The calculated position│                            ╱ Does the ╲
│ is corrected so, that  │                           ╱ distance between╲
│ the distance between   │◄──Yes──── ╲ current and previous╱
│ current and previous   │                           ╲ positions is larger╱
│ positions would not    │  26                        ╲ than defined?  ╱
│ exceed the maximum     │                             ╲    ╱
│ defined value          │                               ╲╱
└──────────┬───────────┘                                  │No
           │                                              │
           ▼                                              ▼
┌──────────────────────┐                                  │
│ The currently found   │◄─────────────No──────────────────┘
│ position is saved to   │  27
│ the history            │
└──────────┬───────────┘
           │
           ▼
┌──────────────────────┐  28
│ The positions of the  │
│ last minute, including │
│ the currently found,   │
│ are taken              │
└──────────┬───────────┘
           │
           ▼
┌──────────────────────┐  29
│ The taken positions    │
│ are used in the        │
│ clustering algorithm   │
└──────────┬───────────┘
           │
           ▼
┌──────────────────────┐  30
│ The centroid of the    │
│ cluster is found using │
│ the results of the     │
│ clustering algorithm   │
└──────────┬───────────┘
           │
           ▼
┌──────────────────────┐  31
│ The cluster's centroid │
│ is presented as the    │
│ final corrected        │
│ position of WLAN object │
└──────────────────────┘
```

**FIG. 6**

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2650693 A

- US 2003043073 A

**Non-patent literature cited in the description**

- RADAR: an in-building RF-based user location and tracking system. **P. BAHL ; V. N. PADMANABHAN.** INFOCOM 2000. Nineteenth Annual Joint Conference of the IEEE Computer and Communications Societies. Proceedings. IEEE, 2000, vol. 2, 775-784

- **K.-W. CHEUNG ; J. H.-M. SAU ; R. D. MURCH.** A new empirical model for indoor propagation prediction. *Veh. Technol. Ieee Trans.,* 1998, vol. 47 (3), 996-1001